# EUROPEAN PATENT APPLICATION

(11) **EP 1 098 523 A1**
(43) Date of publication of application: **09.05.2001**
(21) Application number: 00309756.5
(22) Date of filing: 03.11.2000
(51) Int. Cl.: H04N 7/24, H04N 5/00

(54) **Information processing apparatus, information processing method, and recording medium**

(30) Priority: 05.11.1999 JP 31452299
(71) Applicant: SONY CORPORATION, Tokyo 141 (JP)
(72) Inventor: Morinaga, Takeo, c/o Intellectual Property Depart., Shinagawa-ku, Tokyo 141 (JP)
(74) Representative: Turner, James Arthur

(57) **Abstract**

An information processing apparatus records a received transport stream so that the received transport stream can be played in various playback modes. From the received transport stream, a packet to be recorded is extracted. A time stamp is appended to the extracted packet. The packet is temporarily stored. The stored packet is read in units of one block of a predetermined data amount, and an index is appended. The index includes data indicating a block sequence relationship and user information. The indexed block is output to a storage device such as a hard disk and is recorded. Playback in various special-feature playback modes can be performed by referring to indexes and determining relationships between blocks.

## Description

The present invention relates to information processing apparatuses, information processing methods, and recording media, and more specifically, relates to an information processing apparatus, an information processing method, and a recording medium, for appending, when recording a received transport stream in a storage device such as a hard disk, an index indicating a block sequence relationship or the like in a predetermined block units and recording the transport stream.

Recently, full-scale digital satellite broadcasting has begun and various types of digital satellite broadcast receivers are being sold commercially. Among these receivers, there is a receiver that includes a built-in storage device, such as a hard disk, for recording a received digital satellite broadcast program.

When the above digital satellite broadcast receivers are to record an AV (Audio Visual) stream, such as a transport stream, if the AV stream is to be continuously recorded in predetermined block units, there are problems as follows. It is impossible to determine whether there is any relationship between a predetermined block and a block immediately before the predetermined block. It is impossible to play the stream while fast-forwarding the stream, as in special-feature playback modes such as fast-forward playback. It is impossible to record information concerning the stream together with the stream itself. Therefore, digital satellite broadcast receivers do not offer full functionality.

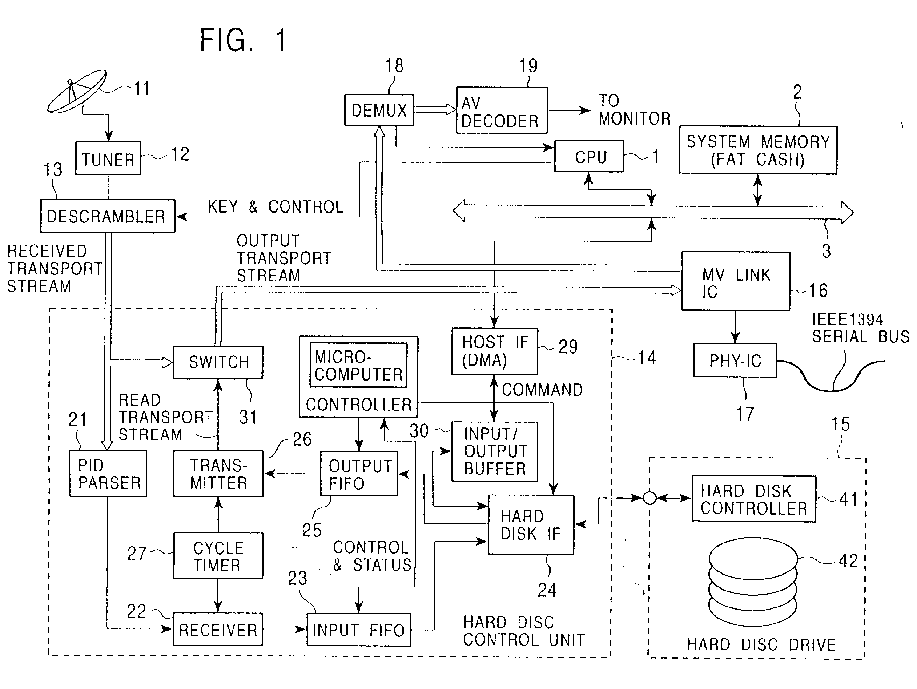

Fig. 1 shows an example of the structure of a known digital satellite broadcast receiver for receiving digital satellite broadcasting, which includes a built-in hard disk drive 15 as a storage device.

The digital satellite broadcast receiver receives a transport stream as a digital satellite broadcast program from a broadcasting station (not shown). The digital satellite broadcast receiver displays images and produces sounds as the transport stream. Also, the digital satellite broadcast receiver records the transport stream and, subsequently, plays the recorded transport stream.

Specifically, an antenna 11 receives a digital satellite airwave. The received signal is output to a tuner 12. The tuner 12 demodulates the received signal from the antenna 11 and obtains a transport stream. The transport stream is supplied to a descrambler 13. Under the control of a CPU 1, the descrambler 13 descrambles the scrambled transport stream from the tuner 12 using a decryption key supplied from the CPU 1 and outputs the descrambled transport stream to a hard disk control unit 14.

The transport stream output from the descrambler 13 (hereinafter referred to as a "received transport stream") is supplied to a packet identification (PID) parser 21 and a switch 31 in the hard disk control unit 14. Besides the received transport stream, a transport stream to be read from the hard disk drive 15 is also supplied from a transmitter 26 to the switch 31.

When reading the received transport stream, the switch 31 selects the received transport stream among the two input transport streams, i.e., the received transport stream and the transport stream output from the transmitter 26. The received transport stream is output as an output transport stream to an Moving Picture Experts Group link integrated circuit (hereinafter referred to as an "MV link IC") ;16.

The MV link IC 16 processes the output transport stream. For example, the MV link IC 16 performs link-layer processing in the layer structure of an IEEE 1394 serial bus and outputs the output transport stream to a PHY-IC 17. Alternatively, the MV link CI 16 outputs the output transport stream to a demultiplexer (DEMUX) 18.

The PHY-IC 17 is configured to perform link-layer processing in the layer structure of the IEEE 1394 serial bus. When the PHY-IC 17 receives the output transport stream from the MV link IC 16, the PHY-IC 17 performs isochronous transfer of the output transport stream to an IEEE 1394 device (not shown) through the IEEE 1394 serial bus.

The DEMUX 18 includes a microcomputer, a memory, and the like (not shown). From transport packets (hereinafter referred to as "TS packets") forming the output transport stream from the MV link IC 16, the DEMUX 18 separates a TS packet in which section data is disposed. Specifically, the section data includes a program association table (PAT), a program map table (PMT), a decryption key used to descramble the scrambled transport stream, and other control data used for performing control. Furthermore, the DEMUX 18 analyzes content of the TS packet and outputs necessary control data to the CPU 1.

The CPU 1 outputs the decryption key among the section data supplied as above from the DEMUX 18 to the descrambler 13. Based on the other section data supplied from the DEMUX 18, the CPU 1 controls the descrambler 13.

The DEMUX 18 separates the TS packet in which the control data (or the section data) is disposed from the output transport stream. In addition, the DEMUX 18 separates a packet in which video data and audio data (hereinafter together referred to as "AV data") for a program selected by a user by operating a remote commander (not shown) and outputs the packet to an AV decoder 19.

The AV decoder 19 performs MPEG-2 decoding of the TS packet from the DEMUX 18 and outputs the resultant AV data to a monitor (not shown). The monitor displays images and outputs sounds as a digital satellite broadcast program.

In contrast, when recording the received transport-stream, the switch 31 selects the received transport stream among the two input transport streams, i.e., the received transport stream and the transport stream supplied from the transmitter 26. The received transport stream is output as an output transport stream to the DEMUX 18 via the MV link IC 16.

As described above, the DEMUX 18 separates the TS packet in which the control data is disposed from the output transport stream. The DEMUX 18 separates necessary control data disposed in that TS packet and outputs the control data to the CPU 1. Based on the control data, the CPU 1 controls the descrambler 13. Accordingly, the descrambler 13 descrambles the transport stream including the TS packet to be recorded.

As described above, the received transport stream is also supplied to the PID parser 21. The PID parser 21 refers to the PIDs of the TS packets forming the received transport stream supplied thereto and supplies only the TS packet concerning a program to be recorded to a receiver 22. The remaining TS packets are discarded. The receiver 22 appends a time stamp based on a clock signal output by a cycle timer 27 to the TS packet from the PID parser 21 and supplies the TS packet to an input first-in first-out (FIFO) 23. Specifically, the cycle timer 27 outputs a clock signal at a predetermined frequency to the receiver 22 and the transmitter 26. The receiver 22 appends the time stamp in synchronization with the clock signal output from the cycle timer 27 to the TS packet from the PID parser 21 and outputs this to the input FIFO 23. The input FIFO 23 sequentially stores TS packets from the receiver 22 and, under the control of a controller 28, outputs the stored TS packets to a hard disk interface (IF) 24 in the order in which the packets are stored.

The controller 28 includes a built-in microcomputer. The controller 28 monitors the status of storage in the input FIFO 23 or in an output FIFO 25 and controls respective data reading/writing. The controller 28 also controls the hard disk IF 24.

When the hard disk IF 24 receives the TS packets from the input FIFO 23, the hard disk IF 24 outputs the TS packets to the hard disk drive 15. A hard disk controller 41 in the hard disk drive 15 receives the TS packets from the hard disk IF 24, and the TS packets are recorded in a hard disk 42.

When reading the TS packets recorded as above in the hard disk 42, the hard disk controller 41 reads a transport stream (hereinafter referred to as a "read transport stream") as a sequence of the TS packets recorded in the hard disk 42 and outputs the read transport stream to the hard disk control unit 14.

In the hard disk control unit 14, the hard disk IF 24 receives the read transport stream and supplies the read transport stream to the output FIFO 25. The output FIFO 25 sequentially stores TS packets forming the read transport stream from the hard disk IF 24 and, under the control of the controller 28, outputs the stored TS packets to the transmitter 26 in the order in which the packets are stored.

The transmitter 26 outputs the read transport stream as a sequence of the TS packets from the output FIFO 25 to the switch 31 in synchronization with the clock signal supplied from the cycle timer 27. Specifically, when recording a transport stream that is a sequence of TS packets output from the PID parser 21 in the hard disk drive 15, time intervals between the TS packets forming the transport stream may be lost. Therefore, the transmitter 26 refers to the time stamps appended to the TS packets by the receiver 22 and outputs the TS packets to the switch 31 with timing so as to restore the time intervals between the TS packets to the original state.

When reading the TS packets recorded in the hard disk 42, the switch 31 selects the read transport stream output from the transmitter 26 and outputs this as an output transport stream to the MV link IC 16. Subsequently, as in the case of processing the received transport stream, isochronous transfer of the read transport stream as the output transport stream is performed through the PHY-IC 17 on the IEEE 1394 serial bus or through the DEMUX 18 and the decoder 19, and the transport stream is thus output to the monitor.

The CPU 1 is connected to a bus 3. The CPU 1 controls the descrambler 13 and performs other processing by reading and executing a program stored in a system memory 2, which is similarly connected to the bus 3. The system memory 2 stores the program for causing the CPU 1 to perform various types of processing.

A host IF 29 forming the hard disk control unit 14 functions as an interface for communicating with the CPU 1 through the bus 3. An input/output buffer 30 provided between the host IF 29 and the hard disk IF 24 temporarily stores data communicated between the host IF 29 and the hard disk IF 24.

The CPU 1 gains access to the hard disk drive 15 through the bus 3, the host IF 29, the input/output buffer 30, and the hard disk IF 24. Accordingly, the CPU 1 records data as a file in the hard disk drive 15 and reads data recorded as a file in the hard disk drive 15.

According to the digital satellite broadcast receiver with the structure shown in Fig. 1, data is recorded in the hard disk drive 15 in the order in which the pieces of data are stored in the input FIFO 23. When reading the data, it is impossible to determine whether there is a relationship between each piece of data. It is thus difficult to perform processing, such as fast-forward playback, as in special-feature playback modes.

Various respective aspects and features of the invention are defined in the appended claims.

In view of the above circumstances, embodiments of the present invention can provide a functional apparatus capable of appending, when recording a received transport stream in a storage device such as a hard disk, an index indicating a block sequence relationship or the like in predetermined block units and recording the transport stream.

According to an aspect of the present invention, an information processing apparatus is provided including a receiving unit for receiving a stream formed of packets in a predetermined format. An extracting unit extracts a packet to be recorded in a recording device from the packets forming the stream received by the receiving unit. When outputting the packet extracted by the extracting unit as a block of a predetermined data amount to the recording device, an output unit appends information indicating a relationship with another block to the block and outputs the block.

According to another aspect of the present invention, a broadcast receiver having a built-in recording device is provided including a receiving unit for receiving a stream formed of packets in a predetermined format. An extracting unit extracts a packet to be recorded in the recording device from the packets forming the stream received by the receiving unit. When outputting the packet extracted by the extracting unit as a block of a predetermined data amount to the recording device, an output unit appends information indicating a relationship with another block to the block and outputs the block. A playback unit performs fast-forward playback based on the information indicating the relationship with the other block.

According to the present invention, it is possible to easily determine relationships between blocks and hence to provide a functional apparatus.

The invention will now be described by way of example with reference to the accompanying drawings, throughout which like parts are referred to by like references, and in which:
Fig. 1 is a block diagram of an example of the structure of a known digital satellite broadcast receiver including a built-in hard disk drive 15;
Fig. 2 is a block diagram of an example of the structure of a digital satellite broadcast receiver according to an embodiment of the present invention;
Fig. 3 is a block diagram of an example of the structure of a hard disk control unit 50 shown in Fig. 2;
Fig. 4 is a flowchart showing a process performed by the hard disk control unit 50 shown in Fig. 3; and
Fig. 5 is an illustration of media.

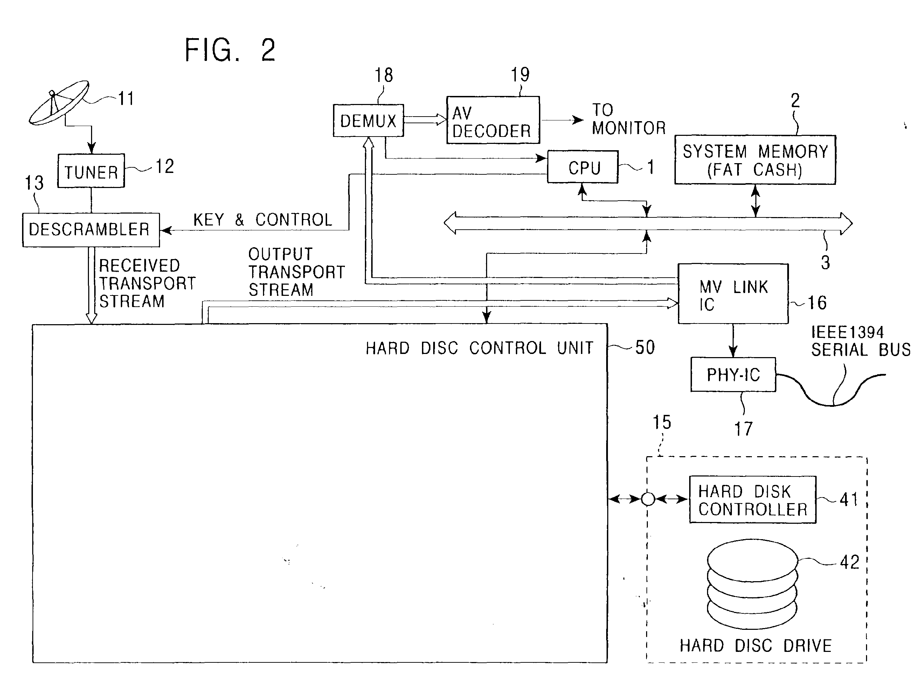

Fig. 2 shows the structure of a digital satellite broadcast receiver according to an embodiment of the present invention. Referring to Fig. 2, the same reference numerals are given to components corresponding to those in Fig. 1, and repeated descriptions of the common portions are omitted. Specifically, the digital satellite broadcast receiver shown in Fig. 2 has the same structure as that in Fig. 1 except for provision of a hard disk control unit 50 instead of the hard disk control unit 14.

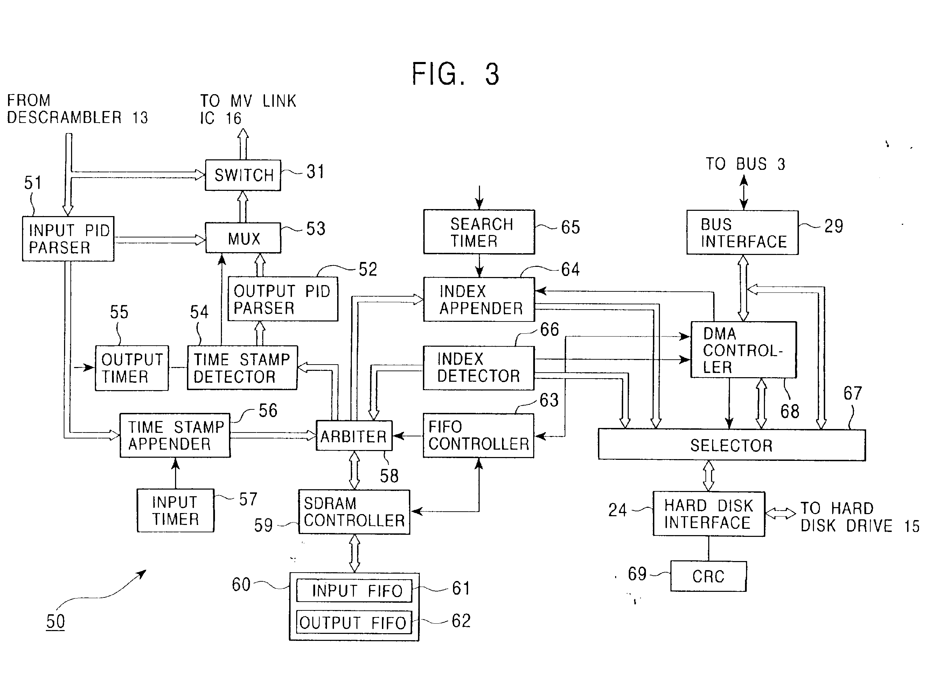

Fig. 3 shows an example of the structure of the hard disk control unit 50 shown in Fig. 2. Referring to Fig. 3, the same reference numerals are given to components corresponding to those in the hard disk control unit 14 shown in Fig. 1, and repeated descriptions of the common portions are omitted.

A received transport stream from a descrambler 13 is supplied to a switch 31 and an input PID parser 51. Among TS packets forming the received transport stream from the descrambler 13, the input PID parser 51 extracts a TS packet only to be recorded (hereinafter referred to as a "recording packet"), a TS packet to be recorded and to be used to perform control (hereinafter referred to as a "recording/control packet"), a TS packet only to be used to perform control (hereinafter referred to as a "control packet"), and a TS packet to be discarded (hereinafter referred to as a "discard packet"). The input PID parser 51 outputs the recording packet and the recording/control packet to a time stamp appender 56 and outputs the control packet to a multiplexer (MUX) 53. The input PID parser 51 discards the discard packet.

An output PID parser 52 receives a read transport stream, which is output by a time stamp detector 54 and is read from a hard disk drive 15. Among TS packets forming the read transport stream, the output PID parser 52 extracts a TS packet to be read (hereinafter referred to as a "reading packet") and a TS packet to be discarded (discard packet). The output PID parser 52 outputs the reading TS packet to the MUX 53 and discards the discard packet.

By communicating with the MUX 53, the output PID parser 52 detects the reading TS packet that has the same PID as the TS packet output by the input PID parser 51 to the MUX 53. The output PID parser 52 changes the PID of the reading TS packet to a different PID. The MUX 53 multiplexes the TS packet output by the input PID parser 51 and the TS packet output by the output PID parser 52. The multiplexed TS packets are output to the switch 31.

The time stamp appender 56 and an input timer 57 perform the same processing as the cycle timer 27 and the receiver 22 shown in Fig. 1, respectively. Specifically, the time stamp appender 56 appends a time stamp based on a clock signal output by the input timer 57 to an input TS packet. The TS packet to which the time stamp is appended by the time stamp appender 56 is input to an arbiter 58. Under the control of a synchronous-DRAM (SDRAM) controller 59, the TS packet input to the arbiter 58 is stored in an input FIFO 61 of an SDRAM 60. The SDRAM controller 59 controls writing and reading of packets to and from the input FIFO 61 and an output FIFO 62 in the SDRAM 60 in accordance with instructions from an FIFO controller 63.

The TS packet stored in the input FIFO 61 is read under the control of the SDRAM controller 59, and the read TS packet is output to an index appender 64 through the arbiter 58. The index appender 64 appends an index described hereinafter to the TS packet and outputs the TS packet to a selector 67. Also, data is input through a bus interface 29 to the selector 67, and commands are input from a direct memory access (DMA) controller 68 to the selector 67. The selector 67 selects the input TS packet, data, commands, and the like, which are then output to predetermined devices, respectively. For example, the TS packet is input from the index appender 64 to the selector 67, and the selector 67 outputs the TS packet to the hard disk IF 24. The TS packet is then input to the hard disk drive 15 and is recorded.

When reading the TS packet recorded as above in the hard disk drive 15, a hard disk controller 41 reads a read transport stream, which is a sequence of TS packets recorded on a hard disk 42, and outputs the read transport stream to the hard disk control unit 50. The read transport stream input through the hard disk IF 24 to the hard disk control unit 50 is output to the index detector 66 through the selector 67.

From the input read transport stream, the index ; detector 66 detects the index appended by the index appender 64. The detected index is stored in a register in the DMA controller 68. The DMA controller 68 can be controlled based on the stored index.

The read transport stream in which the index is detected and removed by the index detector 66 is temporarily stored in the output FIFO 62 in the STRAM 60 through the arbiter 58 and the SDRAM controller 59. Under the control of the SDRAM controller 59, the read transport stream stored in the output FIFO 62 is read by the arbiter 58, and the read transport stream is output to the time stamp detector 54. The time stamp detector 54 detects the time stamp appended to the read transport stream, which is input thereto. In accordance with the detected time stamp, the read transport stream is output to the output PID parser 52. The MUX 53 and the switch 31 performs processing as described above, and the read transport stream is thus output to an MV link-IC 16.

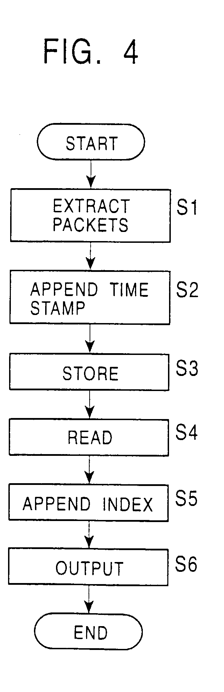

Fig. 4 is a flowchart showing a process subsequent to receiving a transport stream, which is performed by the hard disk control unit 50 shown in Fig. 3. In step S1, the input PID parser 51 extracts a reading packet, a reading/control packet, a control packet, and a discard packet from a received transport stream input from the descrambler 13 to the hard disk control unit 50. The input PID parser 51 outputs the recording packet and the recording/control packet to the time stamp appender 56 and outputs the control packet to the MUX 53. The input PID parser 51 discards the discard packet.

In step S2, the time stamp appender 56 appends a time stamp to the recording packet or the recording/control packet (hereinafter simply referred to as a "TS packet") input thereto based on a clock signal output by the input timer 57, and the TS packet is then output. In step S3, the TS packet to which the time stamp is appended; which is output from the time stamp appender 56, is output to the SDRAM controller 59 by the arbiter 58. Under the control of the SDRAM controller 59, the TS packet is stored in the input FIFO 61 in the SDRAM 60.

In step S4, the TS packet stored in the input FIFO 61 is read under the control of the SDRAM controller 59. The read TS packet is output to the index appender 64 through the arbiter 58. Specifically, the TS packet output from the input FIFO 61 is recorded in the hard disk drive 15 in 128 kbyte units per DMA access. The 128 kbyte unit is defined as one cluster. This size is equivalent to 256 sectors, i.e., the maximum size that can be transferred by DMA. Data in 256 sectors is referred to as a block.

Although the 128 kbyte unit is defined as one cluster in the descriptions above and below, another unit can be defined as one cluster.

According to the present embodiment, one sector (512 bytes) among 256 sectors is used for the index appended by the index appender 64. The remaining 255 sectors are allocated to data for the TS packet. The index appended using one sector includes a search time stamp, a logical block address (LBA), and a user region.

The search time stamp includes 4-byte data which is appended to facilitate processing such as searching. The search time stamp is supplied based on a clock signal output by a search timer 65. The reference time unit can be set by a host (or CPU 1). When the frequency of a system clock signal is 50 MHz, the minimum unit is 256 times the cycle of the system clock signal, i.e., approximately 5 µs. The maximum unit is approximately 5 hours. The search time stamp in the index appended by the index appender 64 is a stamp in which time management within the above time domain can be performed. Alternatively, the system can be configured by using other reference units and byte units.

An LBA link list is used to enable the host to search blocks indicating continuous images. The LBA link list includes a current LBA, a previous LBA, and a next LBA. Each LBA includes 4 bytes and hence the LBA link list includes 12 bytes in total.

The current LBA indicates a head LBA at which a block (referred to as a "block N") currently being processed (to which an index is appended) is to be recorded. The previous LBA indicates a head LBA of a block immediately before the block N. The next LBA indicates a head LBA of a block immediately after the block N. If there is no block immediately after the block N, that is, if the block N is the last block, an invalid flag is added to the next LBA indicating that there is no block immediately after the block N.

The user region uses 496 bytes obtained by removing 16 bytes used for the search time stamp and the LBA link list. User information is written in the user region. A user can record arbitrary information as the user information.

Referring back to Fig. 4, in step S4, the TS packet data in 255 sectors is read from the input FIFO 61 and-the read data is output to the index appender 64. In step S5, the index appender 64 appends an index, which includes the search time stamp, the LBA link list, and the user region, to the input TS packet data and outputs the data to the selector 67.

In step S6, the selector 67 outputs the TS packet data to which the index is appended to the hard disk IF 24. The TS packet data output to the hard disk IF 24 is recorded in the hard disk drive 15.

In this manner, the index is appended to the received transport stream and the transport stream is recorded in the hard disk drive 15. When the transport stream is read, it is possible to determine relationships between read blocks (or TS packets) by referring to indexes. When performing fast-forward playback as in special-feature playback modes, it is possible to play blocks at predetermined intervals by referring to indexes.

A series of the above processing can be performed by hardware or by software. When performing the series of processing by software, a program forming the software is installed from a recording medium in a computer incorporated in dedicated hardware or in a general-purpose personal computer capable of executing various functions by installing various programs.

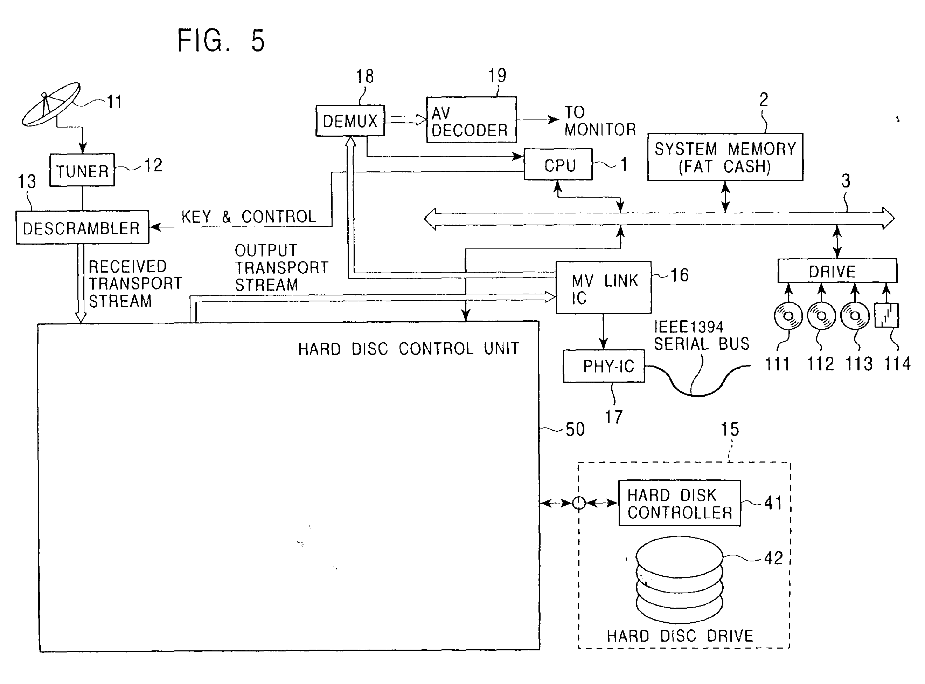

Referring to Fig. 5, a drive 100 is provided in the digital satellite broadcast receiver. A recording medium is distributed to a user, independent of the digital satellite broadcast receiver, thus providing the user with the program. For example, packaged media storing the program, such as a magnetic disk 111 including a floppy disk, an optical disk 112 including a compact disk-read only memory (CD-ROM) and a digital versatile disk (DVD), a magneto-optical disk 113 including a mini-disk (MD), and a semiconductor memory 534 can be distributed. Also, a ROM or a hard disk 15 storing the program can be incorporated beforehand in a computer and then distributed to the user.

In the present description, steps for writing a program provided by a medium not only include time-series processing performed in accordance with the described order but also include parallel or individual processing, which may not necessarily be performed in time series.

In the present description, the system represents an overall apparatus formed by a plurality of apparatuses.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. An information processing apparatus comprising:
receiving means for receiving a stream formed of packets in a predetermined format;
extracting means for extracting, from the packets forming said stream received by said receiving means, a packet to be recorded in a recording device; and
output means for appending, when outputting the packet extracted by said extracting means as a block of a predetermined data amount to said recording device,
information indicating a relationship with another block to said block and for outputting said block.

2. An information processing apparatus according to Claim 1, wherein the information indicating the relationship includes at least one of an address in said recording device at which a block immediately before said block is recorded, an address in said recording device at which said block is to be recorded, and an address in said recording device at which a block immediately after said block is to be recorded.

3. An information processing apparatus according to Claim 1, wherein said output means further appends search time information to said block and outputs said block.

4. An information processing apparatus according to Claim 1, wherein said output means further appends user information to said block and outputs said block.

5. An information processing apparatus according to Claim 1, further comprising playback means for performing fast-forward playback based on the information indicating the relationship with the other block.

6. An information processing method comprising:
an extracting step of extracting, from packets forming a received stream, a packet to be recorded in a recording device; and
an output control step of appending, when outputting the packet extracted in said extracting step as a block of a predetermined data amount to said recording device,
information indicating a relationship with another block to said block and outputting said block.

7. An information processing method according to Claim 6, wherein the information indicating the relationship includes at least one of an address in said recording device at which a block immediately before said block is recorded, an address in said recording device at which said block is to be recorded, and an address in said recording device at which a block immediately after said block is to be recorded.

8. An information processing method according to Claim 6, wherein, in said output control step, search time information is appended to said block and said block is output.

9. An information processing method according to Claim 6, wherein, in said output control step, user information is appended to said block and said block is output.

10. An information processing method according to Claim 6, further comprising a playback step of performing fast-forward playback based on the information indicating the relationship with the other block.

11. A recording medium having recorded thereon a computer-readable program, said program comprising:
an extracting step of extracting, from packets forming a received stream, a packet to be recorded in a recording device; and
an output control step of appending, when outputting the packet extracted in said extracting step as a block of a predetermined data amount to said recording device,
information indicating a relationship with another block to said block and outputting said block.

12. A broadcast receiver having a built-in recording device, comprising:
receiving means for receiving a stream formed of packets in a predetermined format;
extracting means for extracting, from the packets forming said stream received by said receiving means, a packet to be recorded in said recording device;
output means for appending, when outputting the packet extracted by said extracting means as a block of a predetermined data amount to said recording device,
information indicating a relationship with another block to said block and for outputting said block; and
playback means for performing fast-forward playback based on the information indicating the relationship with the other block.

13. A broadcast receiver according to Claim 12,
wherein the information indicating the relationship includes at least one of an address in said recording device at which a block immediately before said block is recorded, an address in said recording device at which said block is to be recorded, and an address in said recording device at which a block immediately after said block is to be recorded.

14. A broadcast receiver according to Claim 12,
wherein said output means further appends search time information to said block and outputs said block.

15. A broadcast receiver according to Claim 12,
wherein said output means further appends user information to said block and outputs said block.
